# EUROPEAN PATENT APPLICATION

(11) **EP 1 480 325 A1**
(43) Date of publication of application: **24.11.2004**
(21) Application number: 03011465.6
(22) Date of filing: 20.05.2003
(51) Int. Cl.: H02P 5/40, H02K 19/10

(54) **Method for controlling the torque or the rotational speed of a synchronous motor with a slip-ring rotor**

(71) Applicant: Gaetani, Angelo, 48010 Cotignola (Ravenna) (IT)
(72) Inventor: Gaetani, Angelo, 48010 Cotignola (Ravenna) (IT)
(74) Representative: Luppi, Luigi

(57) **Abstract**

Method for torque or speed control in a slip-ring synchronous motor, particularly for electric traction the method comprising the following steps:
- measuring, by means of position sensor means, the mutual angular position between the rotor magnetic field and the stator magnetic field,
- instantaneously sending in parallel said angular position to rotor regulation means and to stator regulation means;
- inputting to said rotor regulation means and to said stator regulation means respectively a current signal and a flow signal;
- sending, to the output of said statoric regulation means, a first current signal to a static converter, said first signal indicating a rotating statoric magnetic field which is substantially in quadrature with respect to the rotor field and as the variation of the value of the torque generated by the machine;
- sending, to the output of said rotoric regulation means, of a first flow signal indicating the flow change and, consequently, the change of the value of the generated electromagnetic torque.

## Description

The present invention concerns a torque or speed control of a synchronous machine, particularly for controlling an electric traction means.

On the market, are already known direct current machine for controlling a torque drive or speed drive which are (the machine) series or parallel or single excited. Although, these machine can be excellently used for speed drive or torque drive control, said machines have serious problems connected to the power supplied, which is limited because of the fact that currents on the brushes must remain below certain limit values, that are chosen because of safe conditions for avoiding the onset of spark in correspondence of the same current drawing brushes.

Alternatively to the latest, for reasons connected to the manufacturing costs, the so called brushless motors have been contrived, which, by means of suitable technical arrangement, connected to the carrying out and the vector control techniques, allowed to obtain a machine that simulates a direct current motor. In fact, the structure of such a machine, named as brushless machine, substantially consist of a synchronous machine (having an outer rotor and an inner inductor), of a position transducer, and of matrix of static switches feeding the windings of the stator.

Appropriately controlling the windings of the stator, a perfect quadrature of the exciting fields and of the reaction ones, also on the instantaneous values, so simulating the working of the direct current machine. Also this machine, even though it has an high dynamism, has limitations. In fact the particular structure of the motor, that is extremely brittle, limits the rotation speed under a limit value over which the centrifugal forces, produced during the rotation, could cause the detachment of the permanent magnets, with consequent breakage of the machine. Finally, another problem is due to the fact that in such machines it is not possible to achieve any regulation on the excitation flow.

Technical aim of the present invention is to overcome the before mentioned problems, so providing a control method for a synchronous machine allowing to regulate high torque or speed values.

In the field of this technical aim, an object of the present invention is to provide a method accomplishing the before said aim with a simply structure, which has an easy practical carrying out, a safe use, and an effective working, as well as a relatively reduced cost.

This aim and these objects are all achieved by the present method for a torque or speed controlling in a synchronous motor, particularly for driving an electric traction means, that method comprising an energy accumulator suitable for supplying power to said motor by means of a static converter, which is suitable for actuating a slip-ring synchronous motor, which rotor can be electrically accessed from the outside by brushes, and which stator can be electrically accessed from the outside by a terminal strip, characterised in that it comprises the following steps:
― drawing (measuring), by means of position sensor means, an angular value which indicates the mutual position between the rotating magnetic field of the rotor and the rotating magnetic field of the stator;
― instantaneously sending in parallel said angular value to rotoric regulation means and to statoric regulation means;
― sending to the input of said rotoric regulation means and of said statoric regulation means, respectively, a current signal and a flow signal;
― sending, to the output of said statoric regulation means, a first current signal to a static converter, said first signal indicating a rotating statoric magnetic field which is substantially in quadrature as regards as the rotoric field and as the variation of the value of the torque generated by the machine;
― sending, to the output of said rotoric regulation means, of a first flow signal indicating the flow change and, consequently, the change of the value of the generated electromagnetic torque.

Further features will be particularly clear and obvious from the detailed description of the exemplifying and not limitative diagram of a method, according to the invention, represented in the attached drawing, in which:

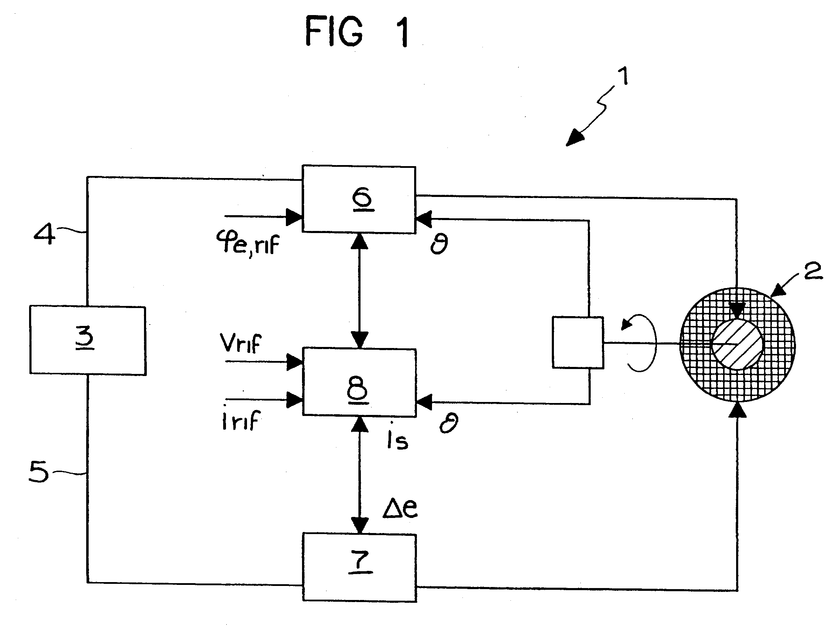

Figure 1 show the above said simplified diagram for controlling said motor.

With particular reference to said Figure, it has been indicated with the number 1 altogether the diagram for carrying out the method according to the invention.

The diagram 1 of the method is applied to a synchronous motor, indicated with 2, which is formed by a slip-ring motor, these ring being suitable for connecting the rotor winding with the electrical brushes, and by a stator formed in turn by a three-phase winding. Upstream the diagram an electrical energy accumulator 3 is provided, which is suitable for feeding, through the electric lines 4, 5, rotoric regulation means 6 and a static converter 6 for converting voltage and frequency, commonly named as inverter. The rotoric regulation means 6 receive a flow signal φ_{e,rif} and an angular value θ coming from a position sensor which is suitable for indicating the position in the space between the rotating magnetic field of the rotor and the rotating magnetic field of the stator, in a statoric reference frame.

The flow signal φ_{e,rif} can be externally set in order to change the electromagnetic torque Cₑₘ∝φ_{e,rif}*iₛ in the hypothesis under which in a complete synchronism the rotoric rotating magnetic field is at 90° electrical degrees in relation with statoric magnetic field, generated by the currents is fed from the converter in the stator of the synchronous motor. The fed current is, is controlled so as to produce a rotating magnetic field which is synchronous and in quadrature with the rotoric field. In order to obtain such an effect, upstream of the static converter 7 statoric regulation means are provided, which receives an input current signal is which can be externally set in order to change the electromagnetic torque Cₑₘ∝φ_{e,rif}*iₛ.

The statoric regulation means receives an input angular value θ which is processed with the current signal is and gives as output, towards the static converter 7, a first current signal is so as the tern of current fed in the stator create a field which is synchronous and in quadrature with the rotor.

The statoric regulation means, in the case in which it has to be accomplished a speed control of the machine, receives an input set speed value V_{rif}, which is with the derivative of the angular value drawn from the transducer.

The statoric regulation means send an signal error Δe to the converter, which changes the voltage and the frequency to be furnished to the machine at a constant ratio.

It has been seen as the invention achieves the proposed objects.

In particular, it has to be underlined that it is possible to control either the torque and the speed of high power by using a synchronous motor.

Furthermore it has to be underlined that the torque can be controlled by setting in an optimal way either the statoric current and the excitation current. This enables to obtain, using a rotor provided of an high number excitation turns (windings), high torque values with low values of excitation current and, thus, to save energy so increasing the autonomy of the machines with an equal value of available energy.

To remove the field distortions at the air gap of the motor, are provided auxiliary poles, which can be controlled directly by the rotoric regulation means. The described type of traction enables the motor to operate on an infinite number of operating points, thus optimising the operating mode of that working cycle that the machine has to perform.

In other words, it is as though the traction machine could use an infinite number of motors among which the machine can choose the optimal one for the performances required at each moment by the operator.

A lot of modifications and versions forming all part of same inventive concept can be applied to the invention.

Furthermore, all the details can be substituted with others technically equivalent.

In other words, the materials used, the forms and the dimensions, can be chosen at will, in dependence of the specific requirements without going out from the protection scope of the following claims.

## Claims

1. Method for controlling torque or speed in a synchronous motor, particularly for driving an electric traction means, comprising an energy accumulator suitable for supplying power to said motor by means of a static converter, which is suitable for actuating a slip-ring synchronous motor, which rotor can be electrically accessed from the outside by brushes, and which stator can be electrically accessed from the outside by a terminal strip, **characterised in that** it comprises the following steps:
― drawing (measuring), by means of position sensor means, an angular value which indicates the mutual position between the rotating magnetic field of the rotor and the rotating magnetic field of the stator;
― instantaneously sending in parallel said angular value to rotoric regulation means and to statoric regulation means;
― sending to the input of said rotoric regulation means and of said statoric regulation means respectively a current signal and a flow signal;
― sending, to the output of said statoric regulation means, a first current signal to a static converter , said first signal indicating a rotating statoric magnetic field which is substantially in quadrature as regards as the rotoric field and as the variation of the value of the torque generated by the machine;
― sending, to the output of said rotoric regulation means, of a first flow signal indicating the flow change and, consequently, the change of the value of the generated electromagnetic torque.

2. Method according to claim 1, **characterised in that** comprises the following steps:
― sending to the input of said statoric regulation means of a set speed value suitable to be compared with said angular value so as to generate an error signal which can be elaborated by said statoric regulation means;
― sending frequency signal, which indicates said error signal to said static converter so as said converter changes the frequency of the statoric currents fed in said motor, said frequency signal, indicating the rotation speed variation of the rotating statoric magnetic field which is synchronous with said rotating rotoric magnetic field.

3. Method according the preceding claims, **characterised in that** said statoric regulation means and said rotoric regulation means are suitable for exchanging informations for optimising said current flow signal so that said electromagnetic torque reaches the highest value.

4. Method according the preceding claims, **characterised in that** said sensor means is formed by a position transducer.
